# EUROPEAN PATENT SPECIFICATION

(11) **EP 3 793 093 B1**
(45) Date of publication and mention of the grant of the patent: **19.02.2025**
(21) Application number: 19380018.2
(22) Date of filing: 10.09.2019
(51) Int. Cl.: H04B 3/54

(54) **COMMUNICATION SYSTEM AND METHOD FOR A RAILWAY NETWORK**
KOMMUNIKATIONSSYSTEM UND VERFAHREN FÜR EIN EISENBAHNNETZ
SYSTÈME ET PROCÉDÉ DE COMMUNICATION POUR UN RÉSEAU FERROVIAIRE

(43) Date of publication of application: 17.03.2021
(73) Proprietor: Siemens Rail Automation S.A.U., 28760 Tres Cantos (Madrid) (ES)
(72) Inventor: Garcia Esteban, Héctor, E-19005 Guadalajara (ES)
(74) Representative: Siemens Patent Attorneys

(56) References cited:
- US-A1- 2006 170 285
- US-A1- 2017 187 420

## Description

The present invention concerns a communication system and method for enabling a communication between a guided vehicle and a control center for guided vehicle operation purposes.

The present invention is essentially related to the field of guided vehicle communication, wherein the expression "guided vehicle" refers to public transport means such as subways, trains or train subunits, etc., as well as load transporting means such as, for example, freight trains, for which safety is a very important factor and which are guided along a route or railway by at least one rail, in particular by two rails. More specifically, the present invention concerns electrified guided vehicles, e.g. powered by an electrical rail (usually called third-rail) or an electrical overhead line (also called catenary), i.e. powered by an electrical infrastructure like wires used to supply electricity to the guided vehicle that is equipped with a connecting device for collecting the electrical power, for instance a pantograph usually installed on the roof of the guided vehicle and configured for collecting power through contact with the overhead line, wherein the voltage range provided to the guided vehicle is typically a medium-voltage (i.e. between 1kV to 36kV), or sometimes a low-voltage ranging between 600V and 1kV.

A general problematic with respect to guided vehicles is the communication between the guided vehicle and a control center located remotely and in charge of operating the guided vehicle. Currently, three main technologies enabling a communication between a guided vehicle and the control center exist. They are:
- the European Rail Traffic Management System (ERTMS), which enables a communication between the guided vehicle and the control center using GSM-R and LTE technology;
- the Communication-Based Train Control (CBTC) system, wherein communication with guided vehicles from a control center is achieved using radio technologies; and
- the Positive Train Control (PTC) technology, which is also based on the use of a radio technology for the communication between the control center and the guided vehicle.

Other communication techniques have been proposed. For instance, US 2006/170285 A1 uses a Power Line Communication (PLC) technique for transmitting data, but only within the cars of a vehicle, like a train, and US 2017/187420 A1 describes the use of said PLC technology in a network formed of electrically and communicatively isolated rail segments, wherein each rail segment is managed by a dedicated central coordinator (CCo), wherein the set of CCo is controlled by a main controller, and wherein information that has to be provided to a cart running on a rail segment managed by a CCo is first provided by the main controller to said CCo, and then transmitted by the CCo to the cart using PLC, making the system very complex and expensive.

An objective of the present invention is to propose a low cost and universal solution to enable a direct communication between a control center and a guided vehicle, notably with respect to existing infrastructures, and which enables a high level of security and is reliable.

For achieving said objective, the present invention proposes notably a communication system and method as disclosed by the objects of the independent claims. Other advantages of the invention are presented in the dependent claims.

The present application discloses a communication system (1) for enabling a communication between a guided vehicle (60) comprising one or several on-board systems (62) and a remote control center (10), wherein the guided vehicle (60) is powered by electricity provided by an electrified railway network comprising a power electrical infrastructure -hereafter PEI-used for providing electrical power to the guided vehicle (60), the communication system (1) comprising: - a power line communication system - hereafter PLC system (30), configured for being connected to the control center (10) via an IP network (20) configured for enabling a communication of IP-based telegrams between them, the PLC system (30) further comprising a coupling unit (30A) for its coupling to the PEI in order to use the latter as physical communication channel, the PLC system (30) being configured for encoding each IP-based telegram received from the control center (10) into a PLC signal and for sending the PLC signal to the guided vehicle (60) by using the PEI as communication channel, and- an on-board power line IP based communication system - hereafter OPLC system (65), configured for being installed on-board the guided vehicle (60), configured for being connected to said one or several on-board systems (62) of the guided vehicle, said OPLC system (65) comprising a coupling unit (65A) configured for coupling the OPLC to the PEI that is used as a physical communication channel for the transmission of PLC signals, the OPLC system being configured for decoding into an IP-based telegram a PLC signal received from the control center (10) and/or from another guided vehicle via the PEI and for determining whether the IP-based telegram is addressed to one of said one or several on-board systems of the guided vehicle it is configured to equip, and in the affirmative, transmitting the IP-based telegram or data comprised within said IP-based telegram to the on-board system (62) addressed by said IP-based telegram, otherwise re-encoding the IP-based telegram into a PLC signal and re-injecting the latter in the PEI; wherein each IP-based telegram comprises an identification data configured for enabling an identification of one or several recipients of the IP-based telegram. The present application discloses a method of communication for a guided vehicle (60) powered by electricity provided by an electrified railway network comprising a power electrical infrastructure - hereafter PEI - used for providing electrical power to the guided vehicle (60), the method comprising the following steps:a) for transmitting a signal or data from a remote control center (10) to the guided vehicle (60):- sending (201) from the control center (10) to a PLC system (30) an IP-based telegram encoding said signal or data;- encoding (202), by means of the PLC system (30), the received IP-based telegram into a PLC signal;- sending (203) from the PLC system (30) said PLC signal, wherein said sending comprises using the PEI as channel for communicating PLC signals; - receiving (204), by means of an OPLC system (65) configured for being installed on-board the guided vehicle (60), said PLC signal and decoding the latter in order to determine the IP-based telegram which was encoded into said PLC signal;- determining (205) whether the IP-based telegram is addressed to an on-board system (62) of the guided vehicle the OPLC system equips, and in the affirmative, transmitting the IP-based telegram or data comprised within said IP-based telegram to the on-board system addressed by said IP-based telegram, otherwise reencoding the IP-based telegram into a PLC signal and re-injecting the latter in the PEI as it was originally sent by the PLC or OPLC system that created the original PLC signal. The present application discloses a communication system (1) for enabling a communication between a guided vehicle (60) comprising one or several on-board systems (62) and a remote control center (10), wherein the guided vehicle (60) is powered by electricity provided by an electrified railway network comprising a power electrical infrastructure -hereafter PEI-used for providing electrical power to the guided vehicle (60), the communication system (1) comprising:- a power line communication system - hereafter PLC system (30), configured for being connected to the control center (10) via an IP network (20) configured for enabling a communication of IP-based telegrams between them, the PLC system (30) further comprising a coupling unit (30A) for its coupling to the PEI in order to use the latter as physical communication channel, the PLC system (30) being configured for decoding a PLC signal sent by the guided vehicle (60) via the PEI and for transmitting to the control center (10) an IP-based telegram determined by decoding the received PLC signal if the control center (10) is a recipient of the IP-based telegram, - an on-board power line IP based communication system - hereafter OPLC system (65), configured for being installed on-board the guided vehicle (60), configured for being connected to said one or several on-board systems (62) of the guided vehicle, said OPLC system (65) comprising a coupling unit (65A) configured for coupling the OPLC to the PEI that is used as a physical communication channel for the transmission of PLC signals, the OPLC system being configured for encoding an IP-based telegram received from one of said one or several on-board systems (62) into a PLC signal and for sending the PLC signal to another guided vehicle and/or to the control center (10) by using the PEI as communication channel, wherein each IP-based telegram comprises an identification data configured for enabling an identification of one or several recipients of the IP-based telegram. A present application discloses a method of communication for a guided vehicle (60) powered by electricity provided by an electrified railway network comprising a power electrical infrastructure - hereafter PEI - used for providing electrical power to the guided vehicle (60), the method comprising the following steps: (b) for transmitting a signal or data from the guided vehicle (60):-sending (206) by an on-board system (62) of the guided vehicle (60) data or an IP-based telegram encoding said data which have to be transmitted to the control center (10) and/or to another guided vehicle;- receiving (207) by the OPLC system (65) said data or said IP-based telegram and creating a PLC signal encoding the received IP-based telegram or an IP-based telegram encoding the received data;- sending (208) from the OPLC system (65) said PLC signal, wherein said sending comprises using the PEI as communication channel for communicating said PLC signal;- receiving (209), by means of the PLC system (30), said IP-based telegram and decoding the latter in order to determine the IP-based telegram which was encoded into the PLC signal;- determining, by the PLC system (30), whether the IP-based telegram is addressed to the control center and/or to one or several on-board systems of said another guided vehicle, and if the control center (10) is indicated by the identification data as a recipient of the IP-based telegram, then transmitting by means of the PLC system the IP-based telegram to the control center (10), otherwise if an on-board system of said another guided vehicle is indicated as recipient of the IP-based telegram, while the control center is not part of the recipients, then the PLC system re-encodes the received IP-based telegram into a PLC signal and re-injects the latter into the PEI.

Further aspects of the present invention will be better understood through the following drawings, wherein like numerals are used for like and corresponding parts:
- Figure 1: schematic representation of a communication system according to the invention.
- Figure 2: flowchart of a preferred method according to the invention.

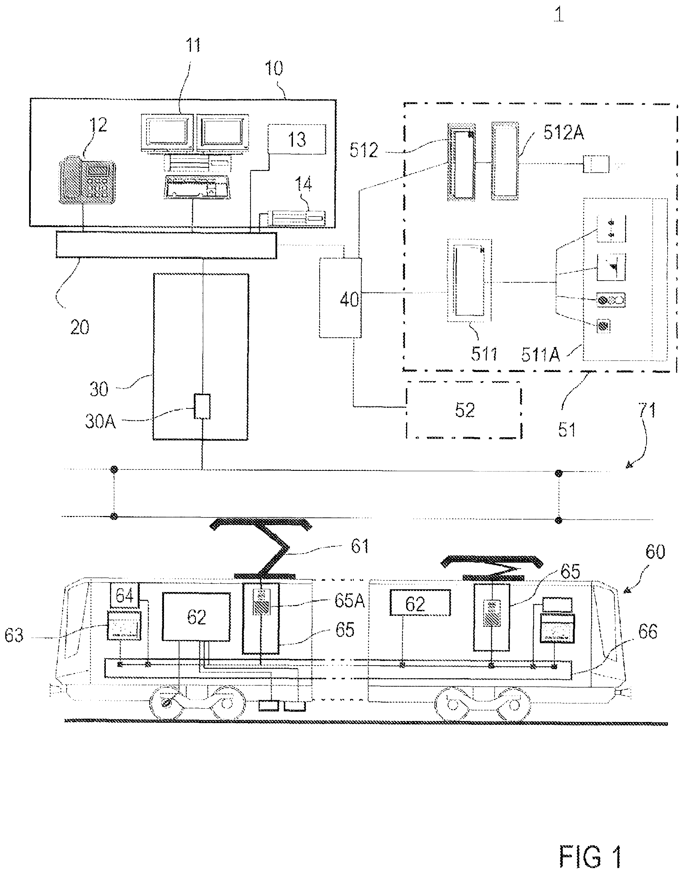

Figure 1 illustrates a preferred embodiment of a communication system 1 enabling a control center 10 and one or several guided vehicles 60 of an electrified railway network to communicate with each other.

The control center 10 comprises typically one or several processors and a memory. In addition, the control center 10 may comprise one or several of the following: a display, an ATS 11, an IP-based telephony system 12, a database 13, a server 14, a CCTV control center, an operator interface. The control center 10 is in charge of managing the displacement of the guided vehicles 60 on the electrified railway network.

The control center 10 is connected to an IP-network 20, which is configured for enabling a communication, i.e. the exchange of data/signals, between said control center 10 and other systems, for instance a PLC system 30, and/or a signaling network 40, and/or systems/devices of a first railway infrastructure 51, and/or systems/devices of a second railway infrastructure 52. Each of said railway infrastructures 51, 52, might be the railway infrastructure of a station, and might comprise one or several systems or devices, notably wayside equipment, connected to said signaling network 40, like an interlocking system 511 connected to field elements 511A (e.g. points, axle counter, traffic lights, etc.), a train control system 512 connected to a radio system 512A for communicating with the guided vehicles 60.

All systems and devices previously described which are connected to the IP network 20 use preferentially IP-based telegrams, and thus internet protocols, for communicating with each other. For instance, the control center 10 according to the invention is configured for creating IP-based telegrams encoding data/signals to be sent to another device/system connected to the IP network 20, and for reading the data/signal comprised in any IP-based telegram it receives.

According to the present invention, the control center 10 is configured for communicating with the guided vehicle 60 using the PLC technology. The guided vehicle 60 is an electric guided vehicle configured for moving on an electrified railway network. Typically, the electrified railway network comprises an electrical infrastructure, like an overhead line 71 or an electrical third rail, used for powering the guided vehicle 60. In order to collect power from said electrical infrastructure, the guided vehicle 60 comprises one or several connecting devices, like the pantograph 61, that are used for connecting the guided vehicle to the electrical infrastructure, as well for disconnecting it from said electrical infrastructure, for instance if the guided vehicle has to be shut down. The energy acquired though the connection of the connecting device to the electrical infrastructure is then used for powering electrical motors of the guided vehicle 60 used for moving said guided vehicle, as well as for powering one or several on-board systems, like a train control system 62, a user interface system 63, a radio system 64, a light system, or a speed control system, etc.

According to the present invention, at least one OPLC system 65 is configured for being installed on-board the guided vehicle 60 and is configured for generating, reading and exchanging PLC signals with the PLC system 30 to which the control center 10 is connected and/or with an OPLC system of another guided vehicle. Each PLC system 30 and OPLC system 65 according to the invention works by coupling to the existing electrical infrastructure, e.g. to the wiring of the overhead line 71, a modulated signal of a given frequency band. For this purpose, the PLC system and the OPLC system both comprise a coupling unit 30A, 65A configured for safely connecting the PLC/OPLC system to the electrical infrastructure of the electrified railway network. The PLC signals are preferentially coupled onto the electrical infrastructure using inductive or capacitive couplers of the coupling unit, specifically designed for this purpose. While the PLC system might be directly connected to the electrical infrastructure by means of its coupling unit 30A, the OPLC system has its coupling unit 65A connected to the connecting device 61, which itself may contact the electrical infrastructure. Said electrical infrastructure is thus used as a physical communication medium or channel that allows the propagation of energy in the form of PLC signals which are for instance pulses or variations in voltage, current or light intensity. Preferentially, each connecting device 61 of the guided vehicle is connected to a different OPLC system, so that a redundancy might be ensured. PLC and OPLC systems are the interface between the voltage network embodied by the electrical infrastructure of the electrified railway network and the control center (for the PLC system) or the on-board systems (for the OPLC system).

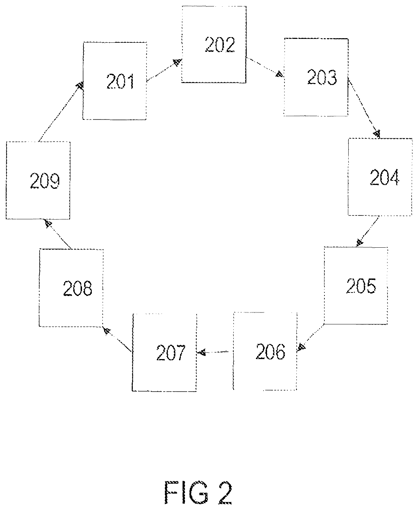

Figure 2 illustrates a preferred embodiment of the method according to the invention in the form of a flowchart. The two following aspects will be described: a first case corresponding to the sending of data from the control center 10 to the guided vehicle 60 and a second case corresponding to the sending of data from an on-board device 62 to the control center 10 and/or to another guided vehicle.

In the first case, the method according to the invention comprises notably the following steps:
At step 201, the control center 10 sends an IP-based telegram to the PLC system 30, wherein said IP-based telegram is configured for encoding some data, which have been for instance acquired by the control center 10 from a field element 511A of the railway infrastructure 51. Said IP-based telegram might be generated by the control center 10 and might comprise an identification data used by any OPLC or PLC system for identifying a recipient of the IP-based telegram. Said identification data may comprise a list of recipients. The identification data is preferentially generated by the control center 10. Alternatively, the PLC system might generate said identification data. For instance, it may comprise a database storing different sets of recipients, wherein for each sender, a set of recipients is predefined. By this way, i.e. by knowing the sender of an IP-based telegram (e.g. from its IP address), the PLC system is capable of automatically creating said identification data.

At step 202, the PLC system 30 receives the IP-based telegram and encodes the latter into a PLC signal. The control center 10 and the PLC system 30 use the IP network 20 as communication network for exchanging IP-based telegrams.

At step 203, the PLC system injects, by means of its coupling unit 30A, said PLC signal onto the electric signal carried by the electrical infrastructure of the electrified railway network. Said electrical infrastructure is thus used as a communication channel between the PLC system 30 and the OPLC system 65 of the guided vehicle 60.

At step 204, the OPLC system 65 receives, via its coupling to the electrical infrastructure by means of its coupling unit 65A, said PLC signal. The OPLC system 65 is capable of detecting the PLC signal injected onto the electric signal carried by said electrical infrastructure.

At step 205, the OPLC system 65 decodes the received PLC signal in order to determine whether the IP-based telegram encoded in the received PLC signal is addressed to one or several on-board systems of the guided vehicle 60. For that purpose, the OPLC system 65 is configured for reading the identification data comprised in the IP-based telegram which was encoded in the received PLC signal and for determining whether one or several of the recipients defined by said identification data are on-board systems of the guided vehicle the OPLC system equips. For that purpose, each OPLC system 65 may comprise a memory storing a list of all on-board systems equipping the guided vehicle and to which an IP-based telegram might be addressed by the control center or by an on-board system of another guided vehicle. By comparing said list to a list of recipients comprised within the identification data, the OPLC system might quickly determine whether the IP-based telegram shall be forwarded to an on-board system of the guided vehicle it equips. Depending on the on-board network 66 installed within the guided vehicle 60, the OPLC system 65 might forward either directly the received IP-based telegram to one of the on-board systems, or data comprised within said IP-based telegram.

If the OPLC system 65 determines that the identification data of the IP-based telegram indicates an on-board system 62 of the guided vehicle as recipient of said IP-based telegram, then the OPLC system automatically transmits the IP-based telegram (or data comprised within said IP-based telegram) to the concerned on-board system indicated as recipient by the identification data. The on-board system 62 then receives the IP-based telegram (or directly said data), which might for instance trigger some action by the on-board system 62. If the identification data comprises as recipients only on-boards systems of the guided vehicle equipped by the OPLC system which has acquired the PLC signal at the origin of said identification data, then the OPLC does not reinject any PLC signal related to the received IP-based telegram in the electrical infrastructure. If the identification data comprises as recipient an on-board system of another guided vehicle, then, in addition of transmitting the IP-based telegram (or data) to the concerned on-board system, the OPLC system is configured for automatically updating the identification data of the IP-based telegram by withdrawing from the recipients each on-board system of the guided vehicle it equips, and creating an amended IP-based telegram comprising the updated identification data, and encoding said amended IP-based telegram into a PLC signal which is then injected in the electrical infrastructure through its coupling with the latter.

If the OPLC system determines from the identification data that none of the on-board systems figures among the recipients of the IP-based telegram, then it automatically reencodes the IP-based telegram into a PLC signal and reinjects the latter in the electrical infrastructure. Preferentially, the reinjected PLC signal is identical to the one that was originally sent by the PLC system in order to avoid any attenuation effects.

The reception by an on-board system 62 of an IP-based telegram sent by the control center 10 and retransmitted by the OPLC system 65, may trigger an action by the on-board system 62 and generate a response of the latter, in the form for instance of an IP-based telegram to be sent to the control center 10 and/or to another guided vehicle. Because of this, the flowchart of Figure 2 might be represented as a loop wherein IP-telegrams are exchanged between different recipients, each IP-telegram received from a sender triggering in response the transmission of a new IP-telegram sent by the recipient to the sender. Of course, other communication models are possible.

In the second case, i.e. the case of a data transmission from the on-board system 62 to the control center 10 and/or to another guided vehicle, the method according to the invention comprises preferably the following steps:
At step 206, the on-board system 62 sends to the OPLC system 65 an IP-based telegram encoding data or a signal to be transmitted to the control center 10 and/or to another guided vehicle. Depending on the on-board network 66, the on-board system 62 might send directly said data or signal to the OPLC instead of an IP-based telegram. Whatever is sent, resp. IP-based telegram, data, or signal, it preferentially comprises an identification data indicating one or several recipients of resp. the IP-based telegram, data, or signal. As explained before for the PLC system, in the case of the OPLC system the identification data is preferentially generated by the on-board system, but alternatively, it might be generated by the OPLC. As for the PLC system, the OPLC system may comprise a database storing different sets of recipients, wherein for each sender (i.e. on-board system having sent the IP-based telegram or data or signal) a set of recipients is predefined. By this way, i.e. by knowing the sender of an IP-based telegram (e.g. from its IP address), the OPLC system is capable of automatically creating said identification data.

At step 207, the OPLC system received resp. the IP-based telegram, data, or signal, and creates a PLC signal encoding resp. said IP-based telegram, or an IP-based telegram generated by the OPLC system from resp. said signal or data. The IP-based telegram comprises in any case said identification data.

At step 208, the OPLC systems injects (i.e. sends), via its coupling with the electrical infrastructure, said PLC signal onto the electric signal carried by the electrical infrastructure.

At step 209, the PLC system 30 or another OPLC system acquires, by means of its coupling to the electrical infrastructure, the PLC signal and determines the IP-based telegram encoded in the latter. The case of an OPLC system acquiring the PLC signal has been previously discussed in the previous steps 204-205 and applies here mutatis mutandis again. The case of the PLC system 30 acquiring the PLC signal is discussed below.

From said PLC signal, the PLC system 30 is configured for determining whether the IP-based telegram is addressed to the control center 10 and/or to one or several on-board systems of another guided vehicle. If the PLC system determines from the identification data that the control center 10 figures among the recipients of the IP-based telegram, then it automatically forwards the IP-based telegram to the control center 10 via said IP network 20. If the control center is the single recipient of the PLC signal, then the PLC system does not reinject any PLC signal onto the electrical infrastructure after determination of said IP-based telegram. If the PLC system 30 determines that, apart from the control center 10, an on-board system of another guided vehicle is a recipient of the acquired IP-based telegram, then the OPLC system is further configured for reinjecting onto the signal carried by the electrical infrastructure a PLC signal encoding an amended IP-based telegram, wherein said amended IP-based telegram is created by the PLC system from the previously determined IP-based telegram to which the identification data has been amended by withdrawing the control center from the recipients defined within the identification data. The PLC signal encoding the amended IP-based telegram is then reinjected onto the electrical signal carried by the electrical infrastructure so that the other recipient(s) of the previously received IP-based telegram might receive the latter, while avoiding that it is retransmitted to the control center 10.

If the PLC system determines that the control center 10 is not part of the recipients of the IP-based telegram decoded from the acquired PLC signal, then the PLC system 30 reencodes the received IP-based telegram into a PLC signal and reinjects the latter into the PEI, as it would have been originally injected (e.g. same amplitude).

According to the present invention, each PLC and OPLC system comprises preferentially said coupling unit that is used for coupling the PLC, resp. OPLC system, to the electrical infrastructure, resp. connecting device, wherein the coupling unit comprises a capacitor configured for being coupled in series with the electrical infrastructure, resp. connecting device, and a line trap connected in series with the capacitor and to which the PLC/OPLC system (e.g. communication equipment of the PLC/OPLC system) is connected. An advantage of such coupling unit is that it is able to cancel an echo of the PLC signal and might be used therefore to prevent a propagation of the PLC signal so that only PLC signals (re)injected by the PLC or OPLC system will have a chance to reach recipients indicated by the identification data, a PLC signal acquired but not reinjected being considered as completely attenuated in the electrical infrastructure (its intensity is sufficiently decreased for enabling to neglect the remaining residual PLC signal in the electrical infrastructure). Therefore, thanks to the coupling unit, each PLC signal read by the PLC/OPLC system is considered as withdrawn from the electrical infrastructure.

While the present invention has been described for embodying a communication between a control center and a guided vehicle, the communication system according to the invention is also perfectly suited for the communication between any remote device connected to the PLC system via the IP network and the on-board system connected to the OPLC system. Indeed, the PLC system and OPLC system enable such a communication between a remote device and an on-board device, wherein the previously described technique based on IP-based telegrams is applied mutatis mutandis.

Finally, the present invention provides the following advantages compared to existing techniques:
- it reduces the costs: indeed, the system according to the invention enables for instance to use a current electrical infrastructure of an electrified railway installation (catenary or third-rail) instead of having to install new communication infrastructures, which results in
   a decrease of the costs for the deployment of the present solution in existing lines or in new installations as there is no need to install bespoke communication infrastructures for guided vehicle-Control Center communication;
   a decrease of the maintenance costs as the costs of the current infrastructure (catenary or third-rail) are already supported, and the implementation of the present invention requires only a limited number of additional devices, like the PLC and OPLC systems;
   a possible implementation of the present solution in existing lines with minor interferences in the service.
- it creates new functionalities within existing communication systems : for instance, for railway network wherein trains currently do not communicate with the control center, the present invention makes a direct communication between the train and the control center possible, opening the door to new train operation possibilities which can improve the overall performance of the revenue service by a closest and more profound communication between train drivers and control center operators. Advantageously, the present technical solution might achieve up to SIL2.

In particular, the system according to the invention is configured for exchanging instant messages (i.e. said IP-telegrams) between a guided vehicle driver and a control center operator. Advantageously, the control center according to the invention may comprise predefined messages or customiza-ble messages that might be sent to a guided vehicle on-board system which enables a communication with the guided vehicle driver. According to another embodiment, the control center comprises an interface configured for implementing a chat-like functionality, wherein communications between guided vehicle driver and control center operator are automatically recorded. Advantageously, the control center and the OPLC system are configured for automatically requesting a confirmation of a reception of a message, wherein a reception of said confirmation is used for triggering one or several train operations.

Preferentially, the OPLC system according to the invention is configured for automatically collecting one or several guided vehicle inputs from one or several on-board systems and for automatically forwarding said guided vehicle inputs to the control center using the IP-based telegrams. Said guided vehicle input is for instance one of the following: an equipment status, a CCTV streaming, a dead man's switch signal, a passenger emergency call. Preferentially, at reception of one of said inputs, the control center is configured for automatically triggering a predefined response, i.e. free of any human intervention.

Advantageously, the system according to the invention enables a sending of regulation instructions to a guided vehicle driver, and according to regulation goals that might be set by a railway operator (e.g. timetable or headway adherence). Preferentially, the control center is configured for automatically sending via the PLC system driver instructions regarding a countdown to depart, and/or a distance to a following and/or previous guided vehicle, and/or a current trip time deviation, and/or a change to dwell time at a platform.

The control center according to the invention is further configured for automatically sending, via said PLC system, information about an event detected and/or commanded by the control center, including for instance a temporary speed restriction, a train stranded ahead for a certain amount of time, an electrified status of the railway network. Additionality, the control center is further configured for automatically sending via the PLC system an overview of a topology of the railway network, so that the latter is automatically displaced in a guided vehicle cabin for informing the driver about guided vehicle positions, routes set, tracks blocked, etc.

Advantageously, the present invention enables also a high level of IT security, since it uses a physical communication channel instead of a wireless communication channel, wherein the physical communication channel requires only two access points (PLC system and OPLC system) free of any hubs, routers, or the like. Additionally, the information travels through a high-voltage mean, which can be only accessed using very specific equipment. This reduces the risk of having the communicated IP-based telegrams altered by a third party. Finally, the information within the IP-based telegram is preferentially codified as analogic signals, which makes it difficult to read or alter it.

## Claims

1. Communication system (1) for enabling a communication between a guided vehicle (60) comprising one or several on-board systems (62) and a remote control center (10), wherein the guided vehicle (60) is powered by electricity provided by an electrified railway network comprising a power electrical infrastructure -hereafter PEI-used for providing electrical power to the guided vehicle (60), the communication system (1) comprising:
- a power line communication system - hereafter PLC system (30), configured for being connected to the control center (10) via an IP network (20) configured for enabling a communication of IP-based telegrams between them, the PLC system (30) further comprising a coupling unit (30A) for its coupling to the PEI in order to use the latter as physical communication channel, the PLC system (30) being configured for encoding each IP-based telegram received from the control center (10) into a PLC signal and for sending the PLC signal to the guided vehicle (60) by using the PEI as communication channel, and
- an on-board power line IP based communication system - hereafter OPLC system (65), configured for being installed on-board the guided vehicle (60), configured for being connected to said one or several on-board systems (62) of the guided vehicle, said OPLC system (65) comprising a coupling unit (65A) configured for coupling the OPLC to the PEI that is used as a physical communication channel for the transmission of PLC signals, the OPLC system being configured for decoding into an IP-based telegram a PLC signal received from the control center (10) and/or from another guided vehicle via the PEI and for determining whether the IP-based telegram is addressed to one of said one or several on-board systems of the guided vehicle it is configured to equip, and in the affirmative, transmitting the IP-based telegram or data comprised within said IP-based telegram to the on-board system (62) addressed by said IP-based telegram, otherwise reencoding the IP-based telegram into a PLC signal and reinjecting the latter in the PEI;
wherein each IP-based telegram comprises an identification data configured for enabling an identification of one or several recipients of the IP-based telegram.

2. Communication system (1) according to claim 1, comprising
- the control center (10) configured for transmitting IP-based telegrams to said one or several on-board systems of the guided vehicle, said control center being configured for using the IP network for the transmission of the IP-based telegrams, wherein the control center is configured for sending to the PLC system said IP-based telegrams, wherein each IP-based telegram is configured for encoding signals or data using an internet protocol;
- said IP network (20) configured for enabling the communication of said IP-based telegrams between the control center and the PLC system.

3. Communication system (1) according to claim 1 or 2, wherein the OPLC system is further configured for encoding an IP-based telegram received from one of said one or several on-board systems (62) into a PLC signal and for sending the PLC signal to another guided vehicle and/or to the control center (10) by using the PEI as communication channel, and wherein the PLC system (30) is further configured for decoding a PLC signal sent by the guided vehicle (60) via the PEI and for transmitting to the control center (10) an IP-based telegram determined by decoding the received PLC signal if the control center (10) is a recipient of the IP-based telegram.

4. Communication system (1) according to claim 3, wherein said control center (10) is configured for receiving IP-based telegrams from said one or several on-board systems of the guided vehicle, said control center being configured for using the IP network for the reception of the IP-based telegrams, wherein the control center is configured for receiving from said PLC system IP-based telegrams.

5. Communication system (1) according to claim 2, wherein said recipients are one or several guided vehicles (60) that are defined each as recipient of the IP-based telegram, and/or a control center (10).

6. Communication system (1) according to one of the claims 1 to 5, comprising a line termination unit - hereafter LTU - configured for being connected to the PEI, said LTU being further configured for being installed at a location wherein each guided vehicle arriving in the neighborhood of said location according to a first moving direction stops, and then departs in a second moving direction being opposite to the first moving direction.

7. Communication system (1) according to claim 6, wherein the LTU comprises a capacitor connected in series with the PEI, and a line trap connected in series with the capacitor.

8. Communication system (1) according to one of the claims 1 to 7, wherein if the OPLC system (65) determines that the IP-based telegram is addressed to an on-board system of another guided vehicle and/or to the control center in addition of being addressed to one of the on-board systems of the guided vehicle it is configured to equip, then the OPLC system is further configured for encoding an amended IP-based telegram into a PLC signal, wherein said amended IP-based telegram is the received IP-based telegram to which the identification data has been amended by withdrawing each recipient that corresponds to an on-board system of the guided vehicle it is configured to equip and that was already addressed by the identification data of the received IP-based telegram, and then for reinjected into the PEI the PLC signal encoding the amended IP-based telegram.

9. Communication system (1) according to one of the claims 1 to 8, wherein the coupling unit (30A) of the PLC system (30A) and the coupling unit (65A) of the OPLC system (65) comprise each a capacitor and a line trap, the capacitor of the OPLC/PLC system being connected with the PEI, the line trap being connected in series with the capacitor, and communication equipment of the PLC/OPLC system being connected in series with the line trap.

10. Method of communication for a guided vehicle (60) powered by electricity provided by an electrified railway network comprising a power electrical infrastructure - hereafter PEI - used for providing electrical power to the guided vehicle (60), the method comprising the following steps:
a) for transmitting a signal or data from a remote control center (10) to the guided vehicle (60):
- sending (201) from the control center (10) to a PLC system (30) an IP-based telegram encoding said signal or data;
- encoding (202), by means of the PLC system (30), the received IP-based telegram into a PLC signal;
- sending (203) from the PLC system (30) said PLC signal, wherein said sending comprises using the PEI as channel for communicating PLC signals;
- receiving (204), by means of an OPLC system (65) configured for being installed on-board the guided vehicle (60), said PLC signal and decoding the latter in order to determine the IP-based telegram which was encoded into said PLC signal;
- determining (205) whether the IP-based telegram is addressed to an on-board system (62) of the guided vehicle the OPLC system equips, and in the affirmative, transmitting the IP-based telegram or data comprised within said IP-based telegram to the on-board system addressed by said IP-based telegram, otherwise reencoding the IP-based telegram into a PLC signal and reinjecting the latter in the PEI as it was originally sent by the PLC or OPLC system that created the original PLC signal.

11. Method according to claim 10, further comprising:
(b) for transmitting a signal or data from the guided vehicle (60):
- sending (206) by an on-board system (62) of the guided vehicle (60) data or an IP-based telegram encoding said data which have to be transmitted to the control center (10) and/or to another guided vehicle;
- receiving (207) by the OPLC system (65) said data or said IP-based telegram and creating a PLC signal encoding the received IP-based telegram or an IP-based telegram encoding the received data;
- sending (208) from the OPLC system (65) said PLC signal, wherein said sending comprises using the PEI as communication channel for communicating said PLC signal;
- receiving (209), by means of the PLC system (30), said IP-based telegram and decoding the latter in order to determine the IP-based telegram which was encoded into the PLC signal;
- determining, by the PLC system (30), whether the IP-based telegram is addressed to the control center and/or to one or several on-board systems of said another guided vehicle, and if the control center (10) is indicated by the identification data as a recipient of the IP-based telegram, then transmitting by means of the PLC system the IP-based telegram to the control center (10), otherwise if an on-board system of said another guided vehicle is indicated as recipient of the IP-based telegram, while the control center is not part of the recipients, then the PLC system reencodes the received IP-based telegram into a PLC signal and reinjects the latter into the PEI.

12. Method according to claim 10 or 11, wherein if the identification data indicates, in addition to the control center (10), an on-board system of another guided vehicle as recipient of the decoded IP-based telegram, then, in addition to transmitting the IP-based telegram to the control center (10), the PLC system is configured for creating an amended IP-based telegram being the received IP-based telegram to which the identification data has been amended by withdrawing the control center from the recipients, the PLC system encoding then the amended IP-based telegram into a PLC signal and injecting the latter into the PEI.

13. Communication system (1) for enabling a communication between a guided vehicle (60) comprising one or several on-board systems (62) and a remote control center (10), wherein the guided vehicle (60) is powered by electricity provided by an electrified railway network comprising a power electrical infrastructure -hereafter PEI-used for providing electrical power to the guided vehicle (60), the communication system (1) comprising:
- a power line communication system - hereafter PLC system (30), configured for being connected to the control center (10) via an IP network (20) configured for enabling a communication of IP-based telegrams between them, the PLC system (30) further comprising a coupling unit (30A) for its coupling to the PEI in order to use the latter as physical communication channel, the PLC system (30) being configured for decoding a PLC signal sent by the guided vehicle (60) via the PEI and for transmitting to the control center (10) an IP-based telegram determined by decoding the received PLC signal if the control center (10) is a recipient of the IP-based telegram,
- an on-board power line IP based communication system - hereafter OPLC system (65), configured for being installed on-board the guided vehicle (60), configured for being connected to said one or several on-board systems (62) of the guided vehicle, said OPLC system (65) comprising a coupling unit (65A) configured for coupling the OPLC to the PEI that is used as a physical communication channel for the transmission of PLC signals, the OPLC system being configured for encoding an IP-based telegram received from one of said one or several on-board systems (62) into a PLC signal and for sending the PLC signal to another guided vehicle and/or to the control center (10) by using the PEI as communication channel,
wherein each IP-based telegram comprises an identification data configured for enabling an identification of one or several recipients of the IP-based telegram.

14. Method of communication for a guided vehicle (60) powered by electricity provided by an electrified railway network comprising a power electrical infrastructure - hereafter PEI - used for providing electrical power to the guided vehicle (60), the method comprising the following steps:
(b) for transmitting a signal or data from the guided vehicle (60):
- sending (206) by an on-board system (62) of the guided vehicle (60) data or an IP-based telegram encoding said data which have to be transmitted to the control center (10) and/or to another guided vehicle;
- receiving (207) by the OPLC system (65) said data or said IP-based telegram and creating a PLC signal encoding the received IP-based telegram or an IP-based telegram encoding the received data;
- sending (208) from the OPLC system (65) said PLC signal, wherein said sending comprises using the PEI as communication channel for communicating said PLC signal;
- receiving (209), by means of the PLC system (30), said IP-based telegram and decoding the latter in order to determine the IP-based telegram which was encoded into the PLC signal;
- determining, by the PLC system (30), whether the IP-based telegram is addressed to the control center and/or to one or several on-board systems of said another guided vehicle, and if the control center (10) is indicated by the identification data as a recipient of the IP-based telegram, then transmitting by means of the PLC system the IP-based telegram to the control center (10), otherwise if an on-board system of said another guided vehicle is indicated as recipient of the IP-based telegram, while the control center is not part of the recipients, then the PLC system reencodes the received IP-based telegram into a PLC signal and reinjects the latter into the PEI.

## Patentansprüche

1. Kommunikationssystem (1) zum Ermöglichen einer Kommunikation zwischen einem spurgebundenen Fahrzeug (60), das ein oder mehrere Bordsysteme (62) umfasst, und einer entfernt gelegenen Leitstelle (10), wobei das spurgebundene Fahrzeug (60) mit Strom aus einem elektrifizierten Schienennetz versorgt wird, das eine Stromversorgungsinfrastruktur - nachfolgend SVI genannt - umfasst, die zum Versorgen des spurgebundenen Fahrzeugs (60) mit Strom dient, wobei das Kommunikationssystem (1) Folgendes umfasst:
- eine Trägerfrequenzanlage - nachfolgend TFA (30) genannt, die so konfiguriert ist, dass sie über ein IP-Netzwerk (20) mit der Leitstelle (10) verbunden werden kann, das so konfiguriert ist, dass es einen Austausch von Telegrammen auf IP-Basis zwischen ihnen ermöglicht, wobei die TFA (30) ferner eine Kopplungseinheit (30A) umfasst, über die sie mit der SVI gekoppelt ist, damit sie letztere als physischen Kommunikationskanal benutzen kann, wobei die TFA (30) so konfiguriert ist, dass sie jedes aus der Leitstelle (10) empfangene Telegramm auf IP-Basis in ein TFA-Signal codiert und das TFA-Signal unter Verwendung der SVI als Kommunikationskanal zu dem spurgebundenen Fahrzeug (60) sendet, und
- eine Trägerfrequenz-Bordanlage auf IP-Basis - nachfolgend TFBA (65) genannt, die so konfiguriert ist, dass sie sich an Bord des spurgebundenen Fahrzeugs (60) installieren lässt, so konfiguriert ist, dass sie sich mit dem einen oder den mehreren Bordsystemen (62) des spurgebundenen Fahrzeugs verbinden lässt, wobei die TFBA (65) eine Kopplungseinheit (65A) umfasst, die so konfiguriert ist, dass sie die TFBA mit der SVI koppelt, die als physischer Kommunikationskanal zum Übertragen von TFA-Signalen benutzt wird, wobei die TFBA so konfiguriert ist, dass sie ein TFA-Signal, das aus der Leitstelle (10) und/oder aus einem anderen spurgebundenen Fahrzeug über die SVI empfangen wurde, in ein Telegramm auf IP-Basis decodiert und ermittelt, ob das Telegramm auf IP-Basis an eines des einen oder der mehreren Bordsysteme des spurgebundenen Fahrzeugs gerichtet ist, das laut Konfiguration damit ausgerüstet werden kann, und falls dies so ist, das Telegramm auf IP-Basis oder darin enthaltene Daten zu dem Bordsystem (62) überträgt, an das das Telegramm auf IP-Basis gerichtet ist, und anderenfalls das Telegramm auf IP-Basis erneut in ein TFA-Signal codiert und dieses erneut in die SVI einspeist, wobei jedes Telegramm auf IP-Basis eine Identifikationsangabe umfasst, die so konfiguriert ist, dass sie eine Identifikation eines oder mehrerer Empfänger des Telegramms auf IP-Basis ermöglicht.

2. Kommunikationssystem (1) nach Anspruch 1, das Folgendes umfasst:
- die Leitstelle (10), die so konfiguriert ist, dass sie Telegramme auf IP-Basis zu dem einen oder den mehreren Bordsystemen des spurgebundenen Fahrzeugs überträgt, wobei die Leitstelle so konfiguriert ist, dass sie das IP-Netzwerk zum Übertragen der Telegramme auf IP-Basis benutzt, wobei die Leitstelle so konfiguriert ist, dass sie die Telegramme auf IP-Basis zur TFA sendet, wobei jedes Telegramm auf IP-Basis so konfiguriert ist, dass es unter Verwendung eines Internetprotokolls Signale oder Daten codiert,
- das IP-Netzwerk (20), das so konfiguriert ist, dass es den Austausch der Telegramme auf IP-Basis zwischen der Leitstelle und der TFA ermöglicht.

3. Kommunikationssystem (1) nach Anspruch 1 oder 2, wobei die TFBA ferner so konfiguriert ist, dass sie ein aus einem des einen oder der mehreren Bordsysteme (62) empfangenes Telegramm auf IP-Basis in ein TFA-Signal codiert und das TFA-Signal unter Verwendung der SVI als Kommunikationskanal zu einem anderen spurgebundenen Fahrzeug und/oder zur Leitstelle (10) sendet, und wobei die TFA (30) ferner so konfiguriert ist, dass sie ein von dem spurgebundenen Fahrzeug (60) über die SVI gesendetes TFA-Signal decodiert und ein Telegramm auf IP-Basis, das durch Decodieren des empfangenen TFA-Signals ermittelt wird, zur Leitstelle (10) sendet, wenn diese ein Empfänger des Telegramms auf IP-Basis ist.

4. Kommunikationssystem (1) nach Anspruch 3, wobei die Leitstelle (10) so konfiguriert ist, dass sie Telegramme auf IP-Basis aus dem einen oder den mehreren Bordsystemen des spurgebundenen Fahrzeugs empfängt, wobei die Leitstelle so konfiguriert ist, dass sie das IP-Netzwerk zum Empfangen der Telegramme auf IP-Basis benutzt, wobei die Leitstelle so konfiguriert ist, dass sie Telegramme auf IP-Basis aus der TFA empfängt.

5. Kommunikationssystem (1) nach Anspruch 2, wobei es sich bei den Empfängern um ein oder mehrere spurgebundene Fahrzeuge (60), die jeweils als Empfänger des Telegramms auf IP-Basis festgelegt sind, und/oder um eine Leitstelle (10) handelt.

6. Kommunikationssystem (1) nach einem der Ansprüche 1 bis 5, das eine Leitungsabschlusseinheit - nachfolgend LAE genannt - umfasst, die so konfiguriert ist, dass sie mit der SVI verbunden werden kann, wobei die LAE ferner so konfiguriert ist, dass sie sich an einer Stelle installieren lässt, an der jedes spurgebundene Fahrzeug, das in deren Umgebung in einer ersten Fahrtrichtung ankommt, anhält und dann in einer der ersten Fahrtrichtung entgegengesetzten zweiten Fahrtrichtung abfährt.

7. Kommunikationssystem (1) nach Anspruch 6, wobei die LAE einen mit der SVI in Reihe geschalteten Kondensator und eine mit dem Kondensator in Reihe geschaltete Trägerfrequenzsperre umfasst.

8. Kommunikationssystem (1) nach einem der Ansprüche 1 bis 7, wobei die TFBA (65) ferner so konfiguriert ist, dass sie, wenn sie ermittelt, dass das Telegramm auf IP-Basis zusätzlich zu einem der Bordsysteme des spurgebundenen Fahrzeugs, das laut Konfiguration damit ausgerüstet werden kann, an ein Bordsystem eines anderen spurgebundenen Fahrzeugs und/oder an die Leitstelle gerichtet ist, ein geändertes Telegramm auf IP-Basis in ein TFA-Signal codiert, wobei es sich bei dem geänderten Telegramm auf IP-Basis um das empfangene Telegramm auf IP-Basis handelt, bei dem die Identifikationsangabe geändert wurde, indem jeder Empfänger gestrichen wird, der einem Bordsystem des spurgebundenen Fahrzeugs entspricht, das laut Konfiguration damit ausgerüstet werden kann, und an den die Identifikationsangabe des empfangenen Telegramms auf IP-Basis bereits gerichtet war, und dann das TFA-Signal, das das Telegramm auf IP-Basis codiert, erneut in die SVI einspeist.

9. Kommunikationssystem (1) nach einem der Ansprüche 1 bis 8, wobei die Kopplungseinheit (30A) der TFA (30A) und die Kopplungseinheit (65A) der TFBA (65) jeweils einen Kondensator und eine Trägerfrequenzsperre umfassen, wobei der Kondensator der TFA/TFBA mit der SVI verbunden ist, die Trägerfrequenzsperre mit dem Kondensator in Reihe geschaltet ist und Kommunikationsausrüstung der TFA/TFBA mit der Trägerfrequenzsperre in Reihe geschaltet ist.

10. Kommunikationsverfahren für ein spurgebundenes Fahrzeug (60), das mit Strom aus einem elektrifizierten Schienennetz versorgt wird, das eine Stromversorgungsinfrastruktur - nachfolgend SVI genannt - umfasst, die zum Versorgen des spurgebundenen Fahrzeugs (60) mit Strom dient, wobei das Verfahren folgende Schritte umfasst:
a) zum Übertragen eines Signals oder von Daten aus einer entfernt gelegenen Leitstelle (10) zu dem spurgebundenen Fahrzeug (60):
- Senden (201) eines Telegramms auf IP-Basis, das das Signal oder die Daten codiert, von der Leitstelle (10) zu einer TFA (30),
- Codieren (202) des empfangenen Telegramms auf IP-Basis mithilfe der TFA (30) in ein TFA-Signal,
- Senden (203) des TFA-Signals aus der TFA (30), wobei das Senden das Benutzen der SVI als Kanal zum Austauschen von TFA-Signalen umfasst,
- Empfangen (204) des TFA-Signals mithilfe einer TFBA (65), die so konfiguriert ist, dass sie sich an Bord des spurgebundenen Fahrzeugs (60) installieren lässt, und Decodieren des TFA-Signals, um das Telegramm auf IP-Basis zu ermitteln, das in das TFA-Signal codiert wurde,
- Ermitteln (205), ob das Telegramm auf IP-Basis an ein Bordsystem (62) des spurgebundenen Fahrzeugs gerichtet ist, das mit der TFBA ausgerüstet ist, und falls dies so ist, Übertragen des Telegramms auf IP-Basis oder darin enthaltener Daten zu dem Bordsystem, an das das Telegramm auf IP-Basis gerichtet ist, und anderenfalls erneutes Codieren des Telegramms auf IP-Basis in ein TFA-Signal und erneutes Einspeisen des Signals in die SVI, wie es ursprünglich von der TFA oder TFBA gesendet wurde, die das ursprüngliche TFA-Signal erzeugt hat.

11. Verfahren nach Anspruch 10, das ferner Folgendes umfasst:
b) zum Übertragen eines Signals oder von Daten aus dem spurgebundenen Fahrzeug (60):
- Senden (206) von Daten oder eines Telegramms auf IP-Basis, das die Daten codiert, die zur Leitstelle (10) und/oder zu einem anderen spurgebundenen Fahrzeug gesendet werden müssen, durch ein Bordsystem (62) des spurgebundenen Fahrzeugs (60),
- Empfangen (207) der Daten oder des Telegramms auf IP-Basis durch die TFBA (65) und Erzeugen eines TFA-Signals, das das empfangene Telegramm auf IP-Basis codiert, oder eines Telegramms auf IP-Basis, das die empfangenen Daten codiert,
- Senden (208) des TFA-Signals aus der TFBA (65), wobei das Senden das Benutzen der SVI als Kommunikationskanal zum Austauschen des TFA-Signals umfasst,
- Empfangen (209) des Telegramms auf IP-Basis mithilfe der TFA (30) und Decodieren des Telegramms, um das Telegramm auf IP-Basis zu ermitteln, das in das TFA-Signal codiert wurde,
- Ermitteln durch die TFA (30), ob das Telegramm auf IP-Basis an die Leitstelle und/oder ein oder mehrere Bordsysteme des anderen spurgebundenen Fahrzeugs gerichtet ist, und wenn die Identifikationsangabe die Leitstelle (10) als Empfänger des Telegramms auf IP-Basis angibt, Übertragen des Telegramms auf IP-Basis mithilfe der TFA zur Leitstelle (10), und anderenfalls, wenn ein Bordsystem des anderen spurgebundenen Fahrzeugs als Empfänger des Telegramms auf IP-Basis angegeben ist, während die Leitstelle nicht zu den Empfängern gehört, erneutes Codieren des empfangenen Telegramms auf IP-Basis in ein TFA-Signal und erneutes Einspeisen des TFA-Signals in die SVI.

12. Verfahren nach Anspruch 10 oder 11, wobei die TFA so konfiguriert ist, dass sie, wenn die Identifikationsangabe zusätzlich zu der Leitstelle (10) ein Bordsystem eines anderen spurgebundenen Fahrzeugs als Empfänger des decodierten Telegramms auf IP-Basis angibt, zusätzlich zum Übertragen des Telegramms auf IP-Basis zur Leitstelle (10) ein geändertes Telegramm auf IP-Basis erzeugt, bei dem es sich um das empfangene Telegramm auf IP-Basis handelt, bei dem die Identifikationsangabe geändert wurde, indem die Leitstelle unter den Empfängern gestrichen wird, wobei die TFA dann das geänderte Telegramm auf IP-Basis in ein TFA-Signal codiert und dieses in die SVI einspeist.

13. Kommunikationssystem (1) zum Ermöglichen einer Kommunikation zwischen einem spurgebundenen Fahrzeug (60), das ein oder mehrere Bordsysteme (62) umfasst, und einer entfernt gelegenen Leitstelle (10), wobei das spurgebundene Fahrzeug (60) mit Strom aus einem elektrifizierten Schienennetz versorgt wird, das eine Stromversorgungsinfrastruktur - nachfolgend SVI genannt - umfasst, die zum Versorgen des spurgebundenen Fahrzeugs (60) mit Strom dient, wobei das Kommunikationssystem (1) Folgendes umfasst:
- eine Trägerfrequenzanlage - nachfolgend TFA (30) genannt, die so konfiguriert ist, dass sie über ein IP-Netzwerk (20) mit der Leitstelle (10) verbunden werden kann, das so konfiguriert ist, dass es einen Austausch von Telegrammen auf IP-Basis zwischen ihnen ermöglicht, wobei die TFA (30) ferner eine Kopplungseinheit (30A) umfasst, über die sie mit der SVI gekoppelt ist, damit sie letztere als physischen Kommunikationskanal benutzen kann, wobei die TFA (30) so konfiguriert ist, dass sie ein von dem spurgebundenen Fahrzeug (60) über die SVI gesendetes TFA-Signal decodiert und ein Telegramm auf IP-Basis, das durch Decodieren des empfangenen TFA-Signals ermittelt wird, zur Leitstelle (10) sendet, wenn diese ein Empfänger des Telegramms auf IP-Basis ist,
- eine Trägerfrequenz-Bordanlage auf IP-Basis - nachfolgend TFBA (65) genannt, die so konfiguriert ist, dass sie sich an Bord des spurgebundenen Fahrzeugs (60) installieren lässt, so konfiguriert ist, dass sie sich mit dem einen oder den mehreren Bordsystemen (62) des spurgebundenen Fahrzeugs verbinden lässt, wobei die TFBA (65) eine Kopplungseinheit (65A) umfasst, die so konfiguriert ist, dass sie die TFBA mit der SVI koppelt, die als physischer Kommunikationskanal zum Übertragen von TFA-Signalen benutzt wird, wobei die TFBA so konfiguriert ist, dass sie ein Telegramm auf IP-Basis, das aus einem des einen oder der mehreren Bordsysteme (62) empfangen wurde, in ein TFA-Signal codiert und das TFA-Signal unter Verwendung der SVI als Kommunikationskanal zu einem anderen spurgebundenen Fahrzeug und/oder zur Leitstelle (10) sendet,
wobei jedes Telegramm auf IP-Basis eine Identifikationsangabe umfasst, die so konfiguriert ist, dass sie eine Identifikation eines oder mehrerer Empfänger des Telegramms auf IP-Basis ermöglicht.

14. Kommunikationsverfahren für ein spurgebundenes Fahrzeug (60), das mit Strom aus einem elektrifizierten Schienennetz versorgt wird, das eine Stromversorgungsinfrastruktur - nachfolgend SVI genannt - umfasst, die zum Versorgen des spurgebundenen Fahrzeugs (60) mit Strom dient, wobei das Verfahren folgende Schritte umfasst:
b) zum Übertragen eines Signals oder von Daten aus dem spurgebundenen Fahrzeug (60):
- Senden (206) von Daten oder eines Telegramms auf IP-Basis, das die Daten codiert, die zur Leitstelle (10) und/oder zu einem anderen spurgebundenen Fahrzeug gesendet werden müssen, durch ein Bordsystem (62) des spurgebundenen Fahrzeugs (60),
- Empfangen (207) der Daten oder des Telegramms auf IP-Basis durch die TFBA (65) und Erzeugen eines TFA-Signals, das das empfangene Telegramm auf IP-Basis codiert, oder eines Telegramms auf IP-Basis, das die empfangenen Daten codiert,
- Senden (208) des TFA-Signals aus der TFBA (65), wobei das Senden das Benutzen der SVI als Kommunikationskanal zum Austauschen des TFA-Signals umfasst,
- Empfangen (209) des Telegramms auf IP-Basis mithilfe der TFA (30) und Decodieren des Telegramms, um das Telegramm auf IP-Basis zu ermitteln, das in das TFA-Signal codiert wurde,
- Ermitteln durch die TFA (30), ob das Telegramm auf IP-Basis an die Leitstelle und/oder ein oder mehrere Bordsysteme des anderen spurgebundenen Fahrzeugs gerichtet ist, und wenn die Identifikationsangabe die Leitstelle (10) als Empfänger des Telegramms auf IP-Basis angibt, Übertragen des Telegramms auf IP-Basis mithilfe der TFA zur Leitstelle (10), und anderenfalls, wenn ein Bordsystem des anderen spurgebundenen Fahrzeugs als Empfänger des Telegramms auf IP-Basis angegeben ist, während die Leitstelle nicht zu den Empfängern gehört, erneutes Codieren des empfangenen Telegramms auf IP-Basis in ein TFA-Signal und erneutes Einspeisen des TFA-Signals in die SVI.

## Revendications

1. Système de communication (1) pour permettre une communication entre un véhicule guidé (60) comprenant un ou plusieurs systèmes embarqués (62) et un centre de commande (10) distant, dans lequel le véhicule guidé (60) est alimenté par de l'électricité fournie par un réseau ferroviaire électrifié comprenant une infrastructure électrique énergétique - ci-après PEI - utilisée pour fournir de l'énergie électrique au véhicule guidé (60), le système de communication (1) comprenant :
- un système de communication par ligne électrique - ci-après système PLC (30), configuré pour être connecté au centre de commande (10) via un réseau IP (20) configuré pour permettre une communication de télégrammes basés sur IP entre eux, le système PLC (30) comprenant en outre une unité de couplage (30A) pour son couplage à la PEI afin d'utiliser cette dernière comme canal de communication physique, le système PLC (30) étant configuré pour coder chaque télégramme basé sur IP reçu en provenance du centre de commande (10) en un signal PLC et pour envoyer le signal PLC au véhicule guidé (60) en utilisant la PEI comme canal de communication, et
- un système de communication basé sur IP par ligne électrique embarqué - ci-après système OPLC (65), configuré pour être installé embarqué sur le véhicule guidé (60), configuré pour être connecté auxdits un ou plusieurs systèmes embarqués (62) du véhicule guidé, ledit système OPLC (65) comprenant une unité de couplage (65A) configurée pour coupler l'OPLC à la PEI qui est utilisée comme un canal de communication physique pour l'émission de signaux PLC, le système OPLC étant configuré pour décoder, en un télégramme basé sur IP, un signal PLC reçu en provenance du centre de commande (10) et/ou d'un autre véhicule guidé via la PEI et pour déterminer si le télégramme basé sur IP est adressé à l'un desdits un ou plusieurs systèmes embarqués du véhicule guidé qu'il est configuré pour équiper, et dans l'affirmative, émettre le télégramme basé sur IP ou des données comprises au sein dudit télégramme basé sur IP vers le système embarqué (62) adressé par ledit télégramme basé sur IP, dans le cas contraire recoder le télégramme basé sur IP en un signal PLC et réinjecter ce dernier dans la PEI ;
dans lequel chaque télégramme basé sur IP comprend une donnée d'identification configurée pour permettre une identification d'un ou de plusieurs destinataires du télégramme basé sur IP.

2. Système de communication (1) selon la revendication 1, comprenant
- le centre de commande (10) configuré pour émettre des télégrammes basés sur IP vers lesdits un ou plusieurs systèmes embarqués du véhicule guidé, ledit centre de commande étant configuré pour utiliser le réseau IP pour l'émission des télégrammes basés sur IP, dans lequel le centre de commande est configuré pour envoyer, au système PLC, lesdits télégrammes basés sur IP, dans lequel chaque télégramme basé sur IP est configuré pour coder des signaux ou des données à l'aide d'un protocole Internet ;
- ledit réseau IP (20) configuré pour permettre la communication desdits télégrammes basés sur IP entre le centre de commande et le système PLC.

3. Système de communication (1) selon la revendication 1 ou 2, dans lequel le système OPLC est en outre configuré pour coder un télégramme basé sur IP reçu en provenance de l'un desdits un ou plusieurs systèmes embarqués (62) en un signal PLC et pour envoyer le signal PLC à un autre véhicule guidé et/ou au centre de commande (10) en utilisant la PEI comme canal de communication, et dans lequel le système PLC (30) est en outre configuré pour décoder un signal PLC envoyé par le véhicule guidé (60) via la PEI et pour émettre, vers le centre de commande (10), un télégramme basé sur IP déterminé par le décodage du signal PLC reçu si le centre de commande (10) est un destinataire du télégramme basé sur IP.

4. Système de communication (1) selon la revendication 3, dans lequel ledit centre de commande (10) est configuré pour recevoir des télégrammes basés sur IP en provenance desdits un ou plusieurs systèmes embarqués du véhicule guidé, ledit centre de commande étant configuré pour utiliser le réseau IP pour la réception des télégrammes basés sur IP, dans lequel le centre de commande est configuré pour recevoir, en provenance dudit système PLC, des télégrammes basés sur IP.

5. Système de communication (1) selon la revendication 2, dans lequel lesdits destinataires sont un ou plusieurs véhicules guidés (60) qui sont définis chacun comme destinataire du télégramme basé sur IP, et/ou un centre de commande (10).

6. Système de communication (1) selon l'une des revendications 1 à 5, comprenant une unité de terminaison de ligne - ci-après LTU - configurée pour être connectée à la PEI, ladite LTU étant en outre configurée pour être installée à un emplacement dans lequel chaque véhicule guidé arrivant au voisinage dudit emplacement selon une première direction de déplacement s'arrête, et part ensuite dans une seconde direction de déplacement qui est opposée à la première direction de déplacement.

7. Système de communication (1) selon la revendication 6, dans lequel la LTU comprend un condensateur connecté en série avec la PEI, et un piège de ligne connecté en série avec le condensateur.

8. Système de communication (1) selon l'une des revendications 1 à 7, dans lequel si le système OPLC (65) détermine que le télégramme basé sur IP est adressé à un système embarqué d'un autre véhicule guidé et/ou au centre de commande en plus d'être adressé à l'un des systèmes embarqués du véhicule guidé qu'il est configuré pour équiper, alors le système OPLC est en outre configuré pour coder un télégramme basé sur IP amendé en un signal PLC, dans lequel ledit télégramme basé sur IP amendé est le télégramme basé sur IP reçu auquel la donnée d'identification a été amendée par le retrait de chaque destinataire qui correspond à un système embarqué du véhicule guidé qu'il est configuré pour équiper et qui était déjà adressé par la donnée d'identification du télégramme basé sur IP reçu, et ensuite pour réinjecter, dans la PEI, le signal PLC codant le télégramme basé sur IP amendé.

9. Système de communication (1) selon l'une des revendications 1 à 8, dans lequel l'unité de couplage (30A) du système PLC (30A) et l'unité de couplage (65A) du système OPLC (65) comprennent chacune un condensateur et un piège de ligne, le condensateur du système OPLC/PLC étant connecté avec la PEI, le piège de ligne étant connecté en série avec le condensateur, et un équipement de communication du système PLC/OPLC étant connecté en série avec le piège de ligne.

10. Procédé de communication pour un véhicule guidé (60) alimenté par de l'électricité fournie par un réseau ferroviaire électrifié comprenant une infrastructure électrique énergétique - ci-après PEI - utilisée pour fournir de l'énergie électrique au véhicule guidé (60), le procédé comprenant les étapes suivantes :
a) pour émettre un signal ou des données d'un centre de commande (10) distant au véhicule guidé (60) :
- l'envoi (201), du centre de commande (10) à un système PLC (30), d'un télégramme basé sur IP codant ledit signal ou lesdites données ;
- le codage (202), au moyen du système PLC (30), du télégramme basé sur IP reçu en un signal PLC ;
- l'envoi (203), à partir du système PLC (30), dudit signal PLC, dans lequel ledit envoi comprend l'utilisation de la PEI comme canal pour la communication de signaux PLC ;
- la réception (204), au moyen d'un système OPLC (65) configuré pour être installé embarqué sur le véhicule guidé (60), dudit signal PLC et le décodage de ce dernier afin de déterminer le télégramme basé sur IP qui a été codé en ledit signal PLC ;
- la détermination (205) de si le télégramme basé sur IP est adressé à un système embarqué (62) du véhicule guidé que le système OPLC équipe, et dans l'affirmative, l'émission du télégramme basé sur IP ou de données comprises au sein dudit télégramme basé sur IP vers le système embarqué adressé par ledit télégramme basé sur IP, dans le cas contraire le recodage du télégramme basé sur IP en un signal PLC et la réinjection de ce dernier dans la PEI tel qu'il a été envoyé à l'origine par le système PLC ou OPLC qui a créé le signal PLC d'origine.

11. Procédé selon la revendication 10, comprenant en outre :
(b) pour émettre un signal ou des données à partir du véhicule guidé (60) :
- l'envoi (206), par un système embarqué (62) du véhicule guidé (60), de données ou d'un télégramme basé sur IP codant lesdites données qui doivent être émises vers le centre de commande (10) et/ou vers un autre véhicule guidé ;
- la réception (207), par le système OPLC (65), desdites données ou dudit télégramme basé sur IP et la création d'un signal PLC codant le télégramme basé sur IP reçu ou un télégramme basé sur IP codant les données reçues ;
- l'envoi (208), à partir du système OPLC (65), dudit signal PLC, dans lequel ledit envoi comprend l'utilisation de la PEI comme canal de communication pour la communication dudit signal PLC ;
- la réception (209), au moyen du système PLC (30), dudit télégramme basé sur IP et le décodage de ce dernier afin de déterminer le télégramme basé sur IP qui a été codé en le signal PLC ;
- la détermination, par le système PLC (30), de si le télégramme basé sur IP est adressé au centre de commande et/ou à un ou plusieurs systèmes embarqués dudit autre véhicule guidé, et si le centre de commande (10) est indiqué par la donnée d'identification comme un destinataire du télégramme basé sur IP, alors l'émission, au moyen du système PLC, du télégramme basé sur IP vers le centre de commande (10), dans le cas contraire si un système embarqué dudit autre véhicule guidé est indiqué comme destinataire du télégramme basé sur IP, tandis que le centre de commande ne fait pas partie des destinataires, alors le système PLC recode le télégramme basé sur IP reçu en un signal PLC et réinjecte ce dernier dans la PEI.

12. Procédé selon la revendication 10 ou 11, dans lequel si la donnée d'identification indique, en plus du centre de commande (10), un système embarqué d'un autre véhicule guidé comme destinataire du télégramme basé sur IP décodé, alors, en plus d'émettre le télégramme basé sur IP vers le centre de commande (10), le système PLC est configuré pour créer un télégramme basé sur IP amendé qui est le télégramme basé sur IP reçu auquel la donnée d'identification a été amendée par le retrait du centre de commande des destinataires, le système PLC codant ensuite le télégramme basé sur IP amendé en un signal PLC et injectant ce dernier dans la PEI.

13. Système de communication (1) pour permettre une communication entre un véhicule guidé (60) comprenant un ou plusieurs systèmes embarqués (62) et un centre de commande (10) distant, dans lequel le véhicule guidé (60) est alimenté par de l'électricité fournie par un réseau ferroviaire électrifié comprenant une infrastructure électrique énergétique - ci-après PEI - utilisée pour fournir de l'énergie électrique au véhicule guidé (60), le système de communication (1) comprenant :
- un système de communication par ligne électrique - ci-après système PLC (30), configuré pour être connecté au centre de commande (10) via un réseau IP (20) configuré pour permettre une communication de télégrammes basés sur IP entre eux, le système PLC (30) comprenant en outre une unité de couplage (30A) pour son couplage à la PEI afin d'utiliser cette dernière comme canal de communication physique, le système PLC (30) étant configuré pour décoder un signal PLC envoyé par le véhicule guidé (60) via la PEI et pour émettre, vers le centre de commande (10), un télégramme basé sur IP déterminé par le décodage du signal PLC reçu si le centre de commande (10) est un destinataire du télégramme basé sur IP,
- un système de communication basé sur IP par ligne électrique embarqué - ci-après système OPLC (65), configuré pour être installé embarqué sur le véhicule guidé (60), configuré pour être connecté auxdits un ou plusieurs systèmes embarqués (62) du véhicule guidé, ledit système OPLC (65) comprenant une unité de couplage (65A) configurée pour coupler l'OPLC à la PEI qui est utilisée comme un canal de communication physique pour l'émission de signaux PLC, le système OPLC étant configuré pour coder un télégramme basé sur IP reçu en provenance de l'un desdits un ou plusieurs systèmes embarqués (62) en un signal PLC et pour envoyer le signal PLC à un autre véhicule guidé et/ou au centre de commande (10) en utilisant la PEI comme canal de communication,
dans lequel chaque télégramme basé sur IP comprend une donnée d'identification configurée pour permettre une identification d'un ou de plusieurs destinataires du télégramme basé sur IP.

14. Procédé de communication pour un véhicule guidé (60) alimenté par de l'électricité fournie par un réseau ferroviaire électrifié comprenant une infrastructure électrique énergétique - ci-après PEI - utilisée pour fournir de l'énergie électrique au véhicule guidé (60), le procédé comprenant les étapes suivantes :
(b) pour émettre un signal ou des données à partir du véhicule guidé (60) :
- l'envoi (206), par un système embarqué (62) du véhicule guidé (60), de données ou d'un télégramme basé sur IP codant lesdites données qui doivent être émises vers le centre de commande (10) et/ou vers un autre véhicule guidé ;
- la réception (207), par le système OPLC (65), desdites données ou dudit télégramme basé sur IP et la création d'un signal PLC codant le télégramme basé sur IP reçu ou un télégramme basé sur IP codant les données reçues ;
- l'envoi (208), à partir du système OPLC (65), dudit signal PLC, dans lequel ledit envoi comprend l'utilisation de la PEI comme canal de communication pour la communication dudit signal PLC ;
- la réception (209), au moyen du système PLC (30), dudit télégramme basé sur IP et le décodage de ce dernier afin de déterminer le télégramme basé sur IP qui a été codé en le signal PLC ;
- la détermination, par le système PLC (30), de si le télégramme basé sur IP est adressé au centre de commande et/ou à un ou plusieurs systèmes embarqués dudit autre véhicule guidé, et si le centre de commande (10) est indiqué par la donnée d'identification comme un destinataire du télégramme basé sur IP, alors l'émission, au moyen du système PLC, du télégramme basé sur IP vers le centre de commande (10), dans le cas contraire si un système embarqué dudit autre véhicule guidé est indiqué comme destinataire du télégramme basé sur IP, tandis que le centre de commande ne fait pas partie des destinataires, alors le système PLC recode le télégramme basé sur IP reçu en un signal PLC et réinjecte ce dernier dans la PEI.
